# EUROPÄISCHE PATENTANMELDUNG

(11) **EP 3 415 286 A1**
(43) Veröffentlichungstag der Anmeldung: **19.12.2018**
(21) Anmeldenummer: 18173506.9
(22) Anmeldetag: 22.05.2018
(51) Int. Cl.: B25J 9/16

(54) **ÜBERWACHUNG EINES ROBOTERS**

(30) Priorität: 12.06.2017 DE 102017005604
(71) Anmelder: KUKA Deutschland GmbH, 86165 Augsburg (DE)
(72) Erfinder: BONIN, Uwe, 86161 Augsburg (DE)
(74) Vertreter: Schlotter, Alexander Carolus Paul

(57) **Zusammenfassung**

Ein erfindungsgemäßes Verfahren zum Überwachen eines Roboters (11, 12) umfasst die Schritte:
- Überwachen (S10, S20) einer Sicherheitsbedingung; und
- Betreiben des Roboters in einem Limitierungsbetriebsmodus, solange die überwachte Sicherheitsbedingung nicht erfüllt ist;
wobei in dem Limitierungsbetriebsmodus ein Abbremsen des Roboters kommandiert (S40) und überwacht (S50) wird, solange dieser ein Geschwindigkeitslimit überschreitet.

## Beschreibung

Die vorliegende Erfindung betrifft ein Verfahren und ein System zum Überwachen eines Roboters sowie eine Roboteranordnung und ein Computerprogrammprodukt zur Durchführung des Verfahrens.

Aus betriebsinterner Praxis ist es bekannt, eine Geschwindigkeit eines Roboters regelungstechnisch auf ein Geschwindigkeitslimit zu reduzieren, sobald eine Person ein äußeres Warnfeld betritt.

Betritt die Person (anschließend auch noch) ein inneres Schutzfeld, wird der Roboter gestoppt, falls seine Geschwindigkeit das Geschwindigkeitslimit überschreitet.

Dabei ist dieses Schutzfeld so groß dimensioniert, dass der Roboter noch sicher gestoppt werden kann, bevor die Person ihn bzw. seinen Gefahrenbereich erreicht, auch wenn seine Geschwindigkeit fehlerhafterweise nicht infolge des Betretens des Warnfelds reduziert wurde.

Dies bedingt zum einen, dass eine Geschwindigkeit des Roboters bereits sehr frühzeitig bzw. in großem Abstand zu Personen reduziert wird, und zum anderen aufgrund des (Not)Stopps eine teilweise unnötige komplette Unterbrechung seines Betriebs.

Aufgabe der vorliegenden Erfindung ist es, eine Überwachung eines Roboters zu verbessern, insbesondere eine oder mehrere der vorstehend erläuterten Nachteile zu reduzieren, vorzugsweise zu eliminieren.

Diese Aufgabe wird durch ein Verfahren mit den Merkmalen des Anspruchs 1 gelöst. Ansprüche 11 - 13 stellen ein System und ein Computerprogrammprodukt zur Durchführung eines hier beschriebenen Verfahrens bzw. eine Roboteranordnung mit einem hier beschriebenen System bzw. zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Überwachen eines Roboters die Schritte auf:
- Überwachen einer Sicherheitsbedingung, die vorliegend auch als eine erste Sicherheitsbedingung bezeichnet wird; und
- Betreiben des Roboters in einem (vorliegend entsprechend auch erster Limitierungsbetriebsmodus bezeichneten) Limitierungsbetriebsmodus, solange, insbesondere nur während, diese überwachte Sicherheitsbedingung nicht erfüllt ist bzw. dies (noch, insbesondere fortwährend) erfasst wird,
wobei in diesem (ersten) Limitierungsbetriebsmodus ein Abbremsen des Roboters, insbesondere durch bzw. in eine(r) Regelung, insbesondere
Geschwindigkeitsregelung, und/oder zum Erreichen eines Geschwindigkeitslimits, kommandiert und (dieses Abbremsen), insbesondere durch bzw. in eine(r) Sicherheitsüberwachung, überwacht wird, solange der Roboter ein bzw. dieses, insbesondere für, insbesondere nur für, diese (erste) Sicherheitsbedingung bzw. diesen (ersten) Limitierungsbetriebsmodus vorgegebene(s) bzw. spezifische(s), insbesondere abgespeicherte(s), Geschwindigkeitslimit überschreitet, das vorliegend entsprechend auch als ein erstes Geschwindigkeitslimit bezeichnet wird, insbesondere dieses (limitierungsbetriebsmodus- und geschwindigkeitslimitbedingte, insbesondere spezifische) Abbremsen des Roboters nur kommandiert und/oder überwacht wird, während der Roboter dieses Geschwindigkeitslimit überschreitet bzw. dies (noch, insbesondere fortwährend) erfasst wird.

Hierdurch kann in einer Ausführung vorteilhaft ein, insbesondere regelungs- und/oder antriebstechnisches, Abbremsvermögen des Roboters (besser) berücksichtigt und/oder eine Geschwindigkeit des Roboters erst spät(er) reduziert und/oder die Häufigkeit einer unnötigen, insbesondere kompletten, Unterbrechung seines Betriebs reduziert werden.

Der Roboter weist in einer Ausführung einen Arm mit wenigstens drei, insbesondere wenigstens sechs, insbesondere wenigstens sieben, Achsen bzw. Gelenke auf, die, insbesondere durch Motoren, aktuierbar sind bzw. aktuiert werden.

Zusätzlich oder alternativ ist der Roboter in einer Ausführung ein mobiler Roboter, in einer Weiterbildung weist er hierzu ein, insbesondere schienengebundenes oder frei bewegliches, insbesondere omnidirektionales, Fahrwerk, insbesondere mit Rädern, insbesondere Mecanum- oder Allseiten-Rädern, Raupen, Ketten oder dergleichen, auf.

Zusätzlich oder alternativ kollaboriert der Roboter in einer Ausführung planmäßig mit wenigstens einer Person bzw. ist hierzu, insbesondere hard- und/oder software-, insbesondere programmtechnisch, eingerichtet bzw. wird hierzu verwendet bzw. ist ein sogenannter humankollaborierender Roboter.

Insbesondere bei solchen wenigstens sechsachsigen, insbesondere redundanten, mobilen und/oder humankollaborierenden Robotern kann die vorliegende Erfindung mit besonderem Vorteil eingesetzt werden.

Ein Nicht-Erfüllen einer Sicherheitsbedingung kann in einer Ausführung einem Erfüllen einer, insbesondere komplementären, Nicht- bzw. Unsicherheitsbedingung entsprechen bzw. entsprechend erfasst werden. So kann insbesondere der Wegfall eines Freigabe-Signals oder das Vorliegen eines Gefährdungs-Signals gleichermaßen ein Nicht-Erfüllen einer Sicherheitsbedingung bzw. Erfüllen einer Nicht- bzw. Unsicherheitsbedingung bedingen bzw. bewirken bzw. diesem entsprechen.

Das erfindungsgemäße Verfahren kann in einer Ausführung auf unterschiedliche Sicherheitsbedingungen spezifisch, insbesondere kaskadiert reagieren.

Entsprechend weist es in einer Ausführung die Schritte auf:
- Überwachen wenigstens einer weiteren Sicherheitsbedingung; und
- Betreiben des Roboters in einem weiteren Limitierungsbetriebsmodus, solange, insbesondere nur während, diese weitere überwachte Sicherheitsbedingung nicht erfüllt ist bzw. dies (noch, insbesondere fortwährend) erfasst wird,
wobei in diesem weiteren Limitierungsbetriebsmodus ein Abbremsen des Roboters, insbesondere durch eine bzw. die bzw. in einer bzw. der Regelung, insbesondere Geschwindigkeitsregelung, und/oder zum Erreichen eines weiteren Geschwindigkeitslimits, kommandiert und (dieses Abbremsen), insbesondere durch eine bzw. die bzw. in einer bzw. der Sicherheitsüberwachung, überwacht wird, solange der Roboter ein bzw. dieses, insbesondere für, insbesondere nur für, diese weitere Sicherheitsbedingung bzw. diesen weiteren Limitierungsbetriebsmodus vorgegebene(s) bzw. spezifische(s), insbesondere abgespeicherte(s), weitere(s) Geschwindigkeitslimit überschreitet, das langsamer, insbesondere niedriger, ist als das erste Geschwindigkeitslimit, insbesondere dieses (weiterelimitierungsbetriebsmodus- und -geschwindigkeitslimitbedingte, insbesondere spezifische) Abbremsen des Roboters nur kommandiert und/oder überwacht wird, während der Roboter dieses weitere Geschwindigkeitslimit überschreitet bzw. dies (noch, insbesondere fortwährend) erfasst wird.

Hierdurch können in einer Ausführung vorteilhaft unterschiedlichen Sicherheitsbedingungen individuell Rechnung getragen und so insbesondere eine Geschwindigkeit des Roboters erst spät(er) reduziert und/oder die Häufigkeit einer unnötigen, insbesondere kompletten, Unterbrechung seines Betriebs reduziert werden.

In einer Ausführung wird bzw. ist in dem (ersten) Limitierungsbetriebsmodus, eine, insbesondere maximale, insbesondere maximal zulässige, Soll-Geschwindigkeit einer oder mehrerer Achsen und/oder einer roboterfesten Referenz, insbesondere des TCPs und/oder eines anderen Punktes am, insbesondere auf, dem Roboter, durch eine bzw. die bzw. in einer bzw. der Regelung, insbesondere Geschwindigkeitsregelung, auf Basis bzw. in Abhängigkeit, insbesondere zum Erreichen bzw. Einhalten, von dem (ersten) Geschwindigkeitslimit, insbesondere auf dieses (erste) Geschwindigkeitslimit vorgegeben, insbesondere reduziert. Zusätzlich oder alternativ wird bzw. ist in dem weiteren Limitierungsbetriebsmodus, eine, insbesondere maximale, insbesondere maximal zulässige, Soll-Geschwindigkeit einer oder mehrerer Achsen und/oder einer roboterfesten Referenz, insbesondere des TCPs und/oder eines anderen Punktes am, insbesondere auf, dem Roboter, durch eine bzw. die bzw. in einer bzw. der Regelung, insbesondere Geschwindigkeitsregelung, auf Basis bzw. in Abhängigkeit, insbesondere zum Erreichen bzw. Einhalten, von dem weiteren Geschwindigkeitslimit, insbesondere auf dieses weitere Geschwindigkeitslimit vorgegeben, insbesondere reduziert.

Hierdurch kann in einer Ausführung das Abbremsen, solange der Roboter das (erste bzw. weitere) Geschwindigkeitslimit überschreitet bzw. zum Erreichen bzw. Einhalten, des (ersten bzw. weiteren) Geschwindigkeitslimits, vorteilhaft, insbesondere durch eine zusätzliche entsprechende Funktion(alität) der (Geschwindigkeits)Regelung und/oder in sanfter Weise realisiert werden.

In einer Ausführung wird eine Sicherheitsreaktion ausgelöst, falls das überwachte Abbremsen des Roboters (in dem (ersten) Limitierungsbetriebsmodus und/oder in dem weiteren Limitierungsbetriebsmodus) eine, insbesondere für, insbesondere nur für, diese (erste bzw. weitere) Sicherheitsbedingung bzw. diesen (ersten bzw. weiteren) Limitierungsbetriebsmodus, vorgegebene bzw. spezifische, insbesondere abgespeicherte, Verzögerungsbedingung nicht erfüllt bzw. (sobald) dies erfasst wird.

Diese Sicherheitsreaktion kann (jeweils) insbesondere ein, insbesondere nichtbahntreues und/oder durch Einfallen von Bremsen bewirktes, Stillsetzen des Roboters umfassen, insbesondere sein, insbesondere ein Stillsetzen des Roboters mit unmittelbarer Unterbrechung einer Energieversorgung, insbesondere wenigstens seiner Antriebe, insbesondere ein sogenannter STOP 0, ein, insbesondere bahntreues und/oder motorisches, Stillsetzen des Roboters mit anschließender Unterbrechung einer Energieversorgung, insbesondere wenigstens seiner Antriebe, insbesondere ein sogenannter STOP 1, oder ein, insbesondere bahntreues und/oder motorisches, Stillsetzen des Roboters ohne anschließende Unterbrechung einer Energieversorgung, insbesondere wenigstens seiner Antriebe, insbesondere ein sogenannter STOP 2.

Hierdurch kann in einer Ausführung einerseits die Sicherheit erhöht und zugleich die Häufigkeit einer unnötigen, insbesondere kompletten, Unterbrechung seines Betriebs reduziert werden.

Die vorgegebene Verzögerungsbedingung (in dem (ersten) Limitierungsbetriebsmodus und/oder in dem weiteren Limitierungsbetriebsmodus) kann in einer Ausführung (jeweils) eine minimale aktuelle Verzögerung bzw. Geschwindigkeitsreduktion bzw. (negative) Beschleunigung des Roboters und/oder eine, insbesondere eine minimale, eine mittlere und/oder eine integrale, Verzögerung bzw. Geschwindigkeitsreduktion bzw. (negative) Beschleunigung des Roboters innerhalb eines bestimmten, insbesondere vorgegebenen, Zeitraums und/oder (ein Erreichen) eine(r) maximale(n) Geschwindigkeit nach einem bestimmten, insbesondere vorgegebenen, Zeitraum, insbesondere ein Einhalten eines vorgegebenen Bremsprofils, insbesondere Unterschreiten einer vorgegebenen Bremsrampe, umfassen, insbesondere sein.

In einer Weiterbildung wird hierzu eine aktuelle Verzögerung des Roboters, insbesondere fortwährend, ermittelt, insbesondere mittels messtechnischer, insbesondere fortwährender, Erfassung einer Pose und/oder Gelenk- bzw. Achsstellung(en) und/oder deren zeitlicher Änderung(en), insbesondere ersten und/oder zweiten zeitlichen Ableitung(en), und gegebenenfalls entsprechender, insbesondere numerischer und/oder ein- bzw. zweifacher (zeitlicher) Differentiation.

Entsprechend kann das (ersten und/oder weitere) Geschwindigkeitslimit und/oder die Verzögerung(sbedingung) und/oder die maximale Geschwindigkeit (jeweils) eine, insbesondere kartesische, Geschwindigkeit (bzw. Änderung einer Geschwindigkeit) einer roboterfesten Referenz, insbesondere eines TCPs und/oder eines anderen Punktes am, insbesondere auf, dem Roboter, des Roboters, und/oder einer oder mehrerer, insbesondere der Mehrzahl, vorzugsweise aller, (bewegten bzw. aktuierten) Achsen bzw. Gelenke des Roboters umfassen bzw. hierfür definiert bzw. vorgegeben sein.

In einer Ausführung beträgt das (erste) Geschwindigkeitslimit und/oder das weitere Geschwindigkeitslimit (jeweils) höchstens 50%, insbesondere höchstens 25%, insbesondere höchstens 10%, einer, insbesondere prozess- bzw. programm-und/oder antriebstechnisch, maximal(zulässig)en Geschwindigkeit des Roboters, insbesondere kann das (erste oder weitere) Geschwindigkeitslimit einen Stillstand des Roboters bedingen bzw. nur eingehalten bzw. dies erfasst werden, sofern bzw. falls der Roboter, wenigstens im Rahmen (einer Toleranz) einer Stillstandsüberwachung, stillsteht bzw. dies erfasst wird. Zusätzlich oder alternativ kann das (erste und/oder weitere) Geschwindigkeitslimit (jeweils) fest, insbesondere durch den Hersteller, vorgegeben sein.

Hierdurch kann in einer Ausführung jeweils, insbesondere in Kombination, vorteilhaft ein, insbesondere regelungs- und/oder antriebstechnisches, Abbremsvermögen des Roboters (besser) berücksichtigt und/oder eine Geschwindigkeit des Roboters erst spät(er) reduziert und/oder die Sicherheit erhöht und/oder die Häufigkeit einer unnötigen, insbesondere kompletten, Unterbrechung seines Betriebs reduziert werden.

Die (erste) Sicherheitsbedingung und/oder die weitere Sicherheitsbedingung kann in einer Ausführung (jeweils) ein- oder mehrwertig bzw. -dimensional sein, insbesondere zwei oder mehr (Unter-, insbesondere Einzel-)Bedingungen aufweisen, die in einer Ausführung disjunktiv ("ODER") bzw. derart miteinander verknüpft sind, dass die (erste bzw. weitere) Sicherheitsbedingung (nur) dann nicht erfüllt, ist, falls alle ihre miteinander verknüpften (Unter- bzw. Einzel-)Bedingungen (kumulativ) nicht erfüllt sind bzw. keine ihrer miteinander verknüpften (Unter- bzw. Einzel-)Bedingungen erfüllt ist.

Zusätzlich oder alternativ kann die (erste) Sicherheitsbedingung und/oder die weitere Sicherheitsbedingung in einer Ausführung (jeweils) ein(en) Aufenthalt des Roboters in einem vorgegebenen Arbeitsraum und/oder ein(en) Mindestabstand des Roboters zu einer nächsten Person, insbesondere einen personenfreien Schutzraum, umfassen, insbesondere sein, und/oder mithilfe eines oder mehrerer, insbesondere optischer, Abstandserfassungsmittel(s), insbesondere wenigstens eines Laserscanners, wenigstens einer Kamera, wenigstens eines Ultraschallsensensors oder dergleichen, überwacht werden.

So ist beispielsweise die (erste bzw. weitere) Sicherheitsbedingung in einer Ausführung nur bzw. genau dann nicht erfüllt, falls bzw. solange der Roboter sich nicht in einem vorgegebenen Arbeitsraum aufhält und zugleich ein Mindestabstand des Roboters zu einer nächsten Person unterschritten ist, insbesondere sich wenigstens eine Person in einem Schutzraum aufhält, bzw. dies erfasst wird, bzw. entsprechend vorgegeben bzw. definiert.

Hierdurch kann in einer Ausführung einerseits die Sicherheit erhöht und zugleich die Häufigkeit einer unnötigen, insbesondere kompletten, Unterbrechung seines Betriebs reduziert werden.

In einer Ausführung wird der (erste) Limitierungsbetriebsmodus infolge einer Erfüllung der (ersten) Sicherheitsbedingung, insbesondere falls die (erste) Sicherheitsbedingung erfüllt bzw. dies erfasst wird, insbesondere unmittelbar bzw. sobald die (erste) Sicherheitsbedingung erfüllt bzw. dies erfasst wird oder mit einer bestimmten, insbesondere vorgegebenen, Nachlaufzeit, (wieder) deaktiviert und entsprechend in einer Ausführung infolge einer Nicht-Erfüllung der (ersten) Sicherheitsbedingung, insbesondere sobald die (erste) Sicherheitsbedingung nicht (mehr) erfüllt bzw. dies erfasst wird, insbesondere unmittelbar bzw. sobald die (erste) Sicherheitsbedingung nicht (mehr) erfüllt bzw. dies erfasst wird oder mit einer bestimmten, insbesondere vorgegebenen, Nachlaufzeit, (wieder) aktiviert.

Zusätzlich oder alternativ wird in einer Ausführung der weitere Limitierungsbetriebsmodus infolge einer Erfüllung der weiteren Sicherheitsbedingung, insbesondere falls die weitere Sicherheitsbedingung erfüllt bzw. dies erfasst wird, insbesondere unmittelbar bzw. sobald die weitere Sicherheitsbedingung erfüllt bzw. dies erfasst wird oder mit einer bestimmten, insbesondere vorgegebenen, Nachlaufzeit, (wieder) deaktiviert und entsprechend in einer Ausführung infolge einer Nicht-Erfüllung der weiteren Sicherheitsbedingung, insbesondere sobald die weitere Sicherheitsbedingung nicht (mehr) erfüllt bzw. dies erfasst wird, insbesondere unmittelbar bzw. sobald die weitere Sicherheitsbedingung nicht (mehr) erfüllt bzw. dies erfasst wird oder mit einer bestimmten, insbesondere vorgegebenen, Nachlaufzeit, (wieder) aktiviert.

Zusätzlich oder alternativ wird in einer Ausführung das (limitierungsbetriebsmodus-und geschwindigkeitslimitbedingte, insbesondere spezifische) Kommandieren und/oder Überwachen des Abbremsens des Roboters infolge eines Unterschreitens des (ersten) Geschwindigkeitslimits, insbesondere falls das (erste) Geschwindigkeitslimit unterschritten bzw. dies erfasst wird, insbesondere unmittelbar bzw. sobald das (erste) Geschwindigkeitslimit unterschritten bzw. dies erfasst wird oder mit einer bestimmten, insbesondere vorgegebenen, Nachlaufzeit, (wieder) deaktiviert, insbesondere unter- bzw. abgebrochen, und entsprechend in einer Ausführung infolge eines Überschreitens des (ersten) Geschwindigkeitslimits, insbesondere sobald das (erste) Geschwindigkeitslimit überschritten bzw. dies erfasst wird, insbesondere unmittelbar bzw. sobald das (erste) Geschwindigkeitslimit überschritten bzw. dies erfasst wird oder mit einer bestimmten, insbesondere vorgegebenen, Nachlaufzeit, (wieder) aktiviert bzw. aufgenommen.

Zusätzlich oder alternativ wird in einer Ausführung das (weiterelimitierungsbetriebsmodus- und -geschwindigkeitslimitbedingte, insbesondere spezifische) Kommandieren und/oder Überwachen des Abbremsens des Roboters infolge eines Unterschreitens des weiteren Geschwindigkeitslimits, insbesondere falls das weitere Geschwindigkeitslimit unterschritten bzw. dies erfasst wird, insbesondere unmittelbar bzw. sobald das weitere Geschwindigkeitslimit unterschritten bzw. dies erfasst wird oder mit einer bestimmten, insbesondere vorgegebenen, Nachlaufzeit, (wieder) deaktiviert, insbesondere unter- bzw. abgebrochen, und entsprechend in einer Ausführung infolge eines Überschreitens des weiteren Geschwindigkeitslimits, insbesondere sobald das weitere Geschwindigkeitslimit überschritten bzw. dies erfasst wird, insbesondere unmittelbar bzw. sobald das weitere Geschwindigkeitslimit überschritten bzw. dies erfasst wird oder mit einer bestimmten, insbesondere vorgegebenen, Nachlaufzeit, (wieder) aktiviert bzw. aufgenommen.

Hierdurch kann in einer Ausführung der Roboter die Geschwindigkeit situationsangepasst selbsttätig wieder erhöhen und/oder die Häufigkeit einer unnötigen, insbesondere kompletten, Unterbrechung seines Betriebs reduziert werden.

In einer Ausführung wird (in dem (ersten) Limitierungsbetriebsmodus und/oder in dem weiteren Limitierungsbetriebsmodus) die (erste bzw. weitere) Sicherheitsbedingung und/oder das Abbremsen des Roboters (jeweils) in sicherer Technik, insbesondere redundant, insbesondere diversitär, überwacht und/oder die Sicherheitsreaktion in sicherer Technik, insbesondere redundant, insbesondere diversitär, ausgelöst.

Zusätzlich oder alternativ wird in einer Ausführung (in dem (ersten) Limitierungsbetriebsmodus und/oder in dem weiteren Limitierungsbetriebsmodus) das Abbremsen des Roboters in nicht-sicherer Technik kommandiert, insbesondere durch die (Geschwindigkeits)Regelung.

Hierdurch kann in einer Ausführung einerseits die Sicherheit erhöht und zugleich Aufwand reduziert werden.

Nach einer Ausführung der vorliegenden Erfindung ist ein System, insbesondere eine Steuerung, zur Durchführung eines hier beschriebenen Verfahrens, insbesondere hard- und/oder software-, insbesondere programmtechnisch, eingerichtet und/oder weist auf:
- Mittel zum Überwachen einer bzw. der (ersten) Sicherheitsbedingung;
- Mittel zum Betreiben des Roboters in einem bzw. dem (ersten) Limitierungsbetriebsmodus, solange die überwachte Sicherheitsbedingung nicht erfüllt ist, wobei dieses Mittel seinerseits aufweist:
- Mittel zum Kommandieren und Mittel zum Überwachen eines Abbremsens des Roboters in diesem (ersten) Limitierungsbetriebsmodus, solange der Roboter ein bzw. das (erste) Geschwindigkeitslimit überschreitet

In einer Ausführung weist das System bzw. sein(e) Mittel auf:
- Mittel zum Überwachen wenigstens einer bzw. der weiteren Sicherheitsbedingung; und Mittel zum Betreiben des Roboters in einem bzw. dem weiteren Limitierungsbetriebsmodus, solange diese weitere überwachte Sicherheitsbedingung nicht erfüllt ist, wobei dieses Mittel seinerseits aufweist: Mittel zum Kommandieren und Mittel zum Überwachen eines Abbremsens des Roboters in diesem weiteren Limitierungsbetriebsmodus, solange der Roboter ein bzw. das langsamere weitere Geschwindigkeitslimit überschreitet; und/oder
- Mittel zum Auslösen einer Sicherheitsreaktion, falls das überwachte Abbremsen des Roboters eine vorgegebene Verzögerungsbedingung nicht erfüllt; und/oder
- Mittel zum Deaktivieren des (ersten) Limitierungsbetriebsmodus infolge einer Erfüllung der (ersten) Sicherheitsbedingung und/oder des weiteren Limitierungsbetriebsmodus infolge einer Erfüllung der weiteren Sicherheitsbedingung und/oder des Kommandierens und/oder des Überwachens des Abbremsens des Roboters infolge eines Unterschreitens des Geschwindigkeitslimits bzw. weiteren Geschwindigkeitslimits; und/oder
- Mittel zum Überwachen der (ersten) Sicherheitsbedingung und/oder der weiteren Sicherheitsbedingung und/oder des Abbremsens des Roboters in sicherer Technik und/oder Mittel zum Auslösen der (ersten bzw. weiteren) Sicherheitsreaktion in sicherer Technik und/oder Mittel zum Kommandieren des Abbremsens des Roboters in nicht-sicherer Technik.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter überwachen kann. Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. die Steuerung bzw. sein/ihr(e) Mittel.

Weitere Vorteile und Merkmale ergeben sich aus den Unteransprüchen und den Ausführungsbeispielen. Hierzu zeigt, teilweise schematisiert:
- Fig. 1:: eine Roboteranordnung mit einem Roboter und einem System zum Überwachen des Roboters nach einer Ausführung der vorliegenden Erfindung;
- Fig. 2:: ein Verfahren zum Überwachen des Roboters nach einer Ausführung der vorliegenden Erfindung; und
- Fig. 3:: ein Verfahren zum Überwachen des Roboters nach einer weiteren Ausführung der vorliegenden Erfindung.

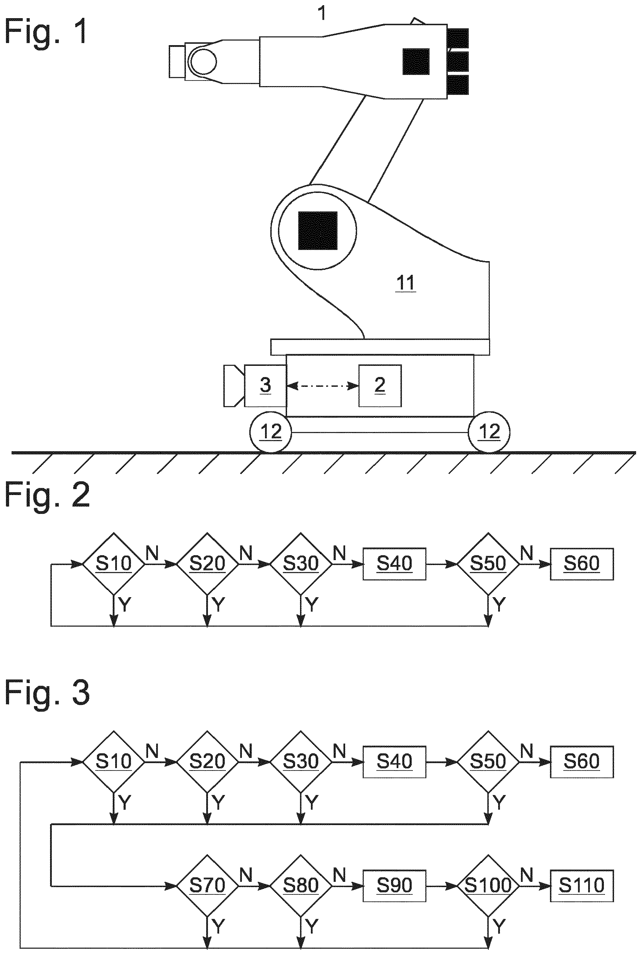

Fig. 1 zeigt eine Roboteranordnung mit einem Roboter und einem System zum Überwachen des Roboters nach einer Ausführung der vorliegenden Erfindung.

Im Ausführungsbeispiel ist der Roboter ein mobiler und humankollaborierender Roboter mit einem sechsachsigen Arm 11 und einem Fahrwerk 12. In Abwandlungen kann der Arm 11 auch mehr oder weniger Achsen aufweisen und/oder der Roboter ein stationärer Roboter sein bzw. das Fahrwerk 12 entfallen.

Das System umfasst eine Robotersteuerung 2, die insbesondere Antriebe des Roboters steuert und in sicherer Technik eine Geschwindigkeit des Roboters und deren Änderung überwachen kann.

Hierzu erfasst die Robotersteuerung 2 Gelenkstellungen und/oder -geschwindigkeiten, aus denen sie durch Vorwärtskinematik eine kartesische Geschwindigkeit des TCPs und/oder eines anderen Punktes am, insbesondere auf, dem Roboter des Roboters und/oder durch numerische Differentiation eine Verzögerung des Roboters, insbesondere seiner Achsen und/oder seines TCPs und/oder eines anderen Punktes am, insbesondere auf, dem Roboter, ermittelt.

Die Robotersteuerung 2 kommuniziert mit einem optischen Abstandserfassungsmittel in Form eines Laserscanners 3. In Abwandlungen können andere und/oder zusätzliche Abstandserfassungsmittel vorgesehen sein bzw. verwendet werden.

Das System, insbesondere dessen Robotersteuerung 2, führt ein nachfolgend mit Bezug auf Fig. 2 erläutertes Verfahren zum Überwachen des Roboters nach einer Ausführung der vorliegenden Erfindung durch bzw. ist hierzu eingerichtet.

In einem Schritt S10 wird geprüft, ob eine erste Unterbedingung einer (ersten) Sicherheitsbedingung erfüllt ist, beispielsweise der Roboter sich in einem vorgegebenen Arbeitsraum aufhält. Solange dies der Fall ist (S10: "Y"), wird Schritt S10 wiederholt.

(Nur) falls dies nicht der Fall ist, wird in einem Schritt S20 geprüft, ob eine zweite Unterbedingung dieser (ersten) Sicherheitsbedingung erfüllt ist, beispielsweise der Roboter wenigstens einen vorgegebenen Mindestabstand zu einer nächsten Person aufweist. Solange (wenigstens) dies der Fall ist (S20: "Y"), kehrt das Verfahren bzw. die Robotersteuerung 2 zu Schritt S10 zurück.

Falls beide Unterbedingungen kumulativ nicht erfüllt sind (S10: "N" UND S20: "N"), ist die (erste) Sicherheitsbedingung nicht erfüllt und das Verfahren bzw. die Robotersteuerung 2 schaltet in einen (ersten) Limitierungsbetriebsmodus um bzw. aktiviert diesen, indem es bzw. sie mit einem Schritt S30 fortfährt.

In einer Abwandlung kann die (erste) Sicherheitsbedingung auch nur die zweite Unterbedingung oder nur die erste Unterbedingung aufweisen bzw. die erste oder zweite Unterbedingung bzw. Schritt S10 oder S20 entfallen. So kann insbesondere Schritt S10 entfallen und das Verfahren bzw. die Robotersteuerung 2 Schritt S20 wiederholen, bis die Bedingung in Schritt S20 nicht mehr erfüllt ist bzw. der Roboter nicht wenigstens den vorgegebenen Mindestabstand zu einer nächsten Person aufweist (S20: "N"). In weiteren Abwandlungen kann die (erste) Sicherheitsbedingung auch zusätzlich oder alternativ zu der hier beschriebenen ersten und/oder zweiten Unterbedingung eine oder mehrere weitere Unterbedingungen aufweisen.

In diesem reduziert eine (Geschwindigkeits)Regelung der Robotersteuerung 2 eine maximal(zulässig)e Soll-Geschwindigkeit für den TCP bzw. den anderen Punkt an dem Roboter und/oder die Achsen des Roboters auf ein (erstes) Geschwindigkeitslimit und prüft, ob der Roboter dieses (erste) Geschwindigkeitslimit (bereits) einhält, das beispielsweise 25% einer maximal (zulässig)en Geschwindigkeit des Roboters beträgt bzw. herstellerseitig fest vorgegeben ist.

Falls dies der Fall ist (S30: "Y"), kehrt das Verfahren bzw. die Robotersteuerung 2 zu Schritt S10 zurück.

Andernfalls bzw. solange der Roboter dieses (erste) Geschwindigkeitslimit überschreitet (S30: "N"), bremst die (Geschwindigkeits)Regelung der Robotersteuerung 2 den Roboter ab, indem sie in einem Schritt S40 seine Antriebe entsprechend kommandiert.

In einem Schritt S50 überwacht das Verfahren bzw. die Robotersteuerung 2 in sicherer Technik, ob eine aktuelle Verzögerung des Roboters wenigstens einen vorgegebenen Wert aufweist bzw. der Roboter wenigstens eine vorgegebene Bremsrampe realisiert. Ist dies der Fall (S50: "Y"), kehrt das Verfahren bzw. die Robotersteuerung 2 zu Schritt S10 zurück.

Andernfalls bzw. falls der Roboter in dem (ersten) Limitierungsbetriebsmodus (vgl. S10: "N" UND S20: "N") bei Überschreiten des (ersten) Geschwindigkeitslimit (vgl. S30: "N"), d.h. trotz entsprechend kommandiertem Abbremsen (vgl. S40) diese Verzögerungsbedingung nicht erfüllt (S50: "N"), wird in einem Schritt S60 ein STOP 0, ein STOP 1 oder ein STOP 2 ausgelöst.

Man erkennt, dass das Kommandieren (vgl. S40) und Überwachen (vgl. S50) dieses Abbremsens nur erfolgt, solange die überwachte (erste) Sicherheitsbedingung nicht erfüllt ist (vgl. S10: "N" UND S20: "N") und der Roboter entsprechend in dem (ersten) Limitierungsbetriebsmodus betrieben wird, und solange (in diesem) der Roboter das (erste) Geschwindigkeitslimit überschreitet (vgl. S30: "N").

Solange bzw. sobald der Roboter das (erste) Geschwindigkeitslimit nicht (mehr) überschreitet (vgl. S30: "Y"), wird weder ein Abbremsen infolge eines Überschreitens dieses Geschwindigkeitslimits kommandiert noch ein solches Abbremsen überwacht.

Solange bzw. sobald die (erste) Sicherheitsbedingung (wieder) erfüllt ist (S10: "Y" ODER S20: "Y"), wird der (erste) Limitierungsbetriebsmodus (wieder) deaktiviert, insbesondere die Reduzierung der Soll-Geschwindigkeit aufgehoben.

Fig. 3 zeigt in Fig. 2 entsprechender Weise ein Verfahren zum Überwachen des Roboters nach einer weiteren Ausführung der vorliegenden Erfindung. Einander entsprechende Merkmale sind durch identische Bezugszeichen identifiziert, so dass auf die vorhergehende Beschreibung Bezug genommen und nachfolgend nur auf Unterschiede eingegangen wird.

In der Ausführung der Fig. 3 kehrt das Verfahren bzw. die Robotersteuerung 2 aus den Schritten S10, S20, S30 bzw. S50 jeweils nicht unmittelbar zu Schritt S10 zurück, sondern fährt stattdessen jeweils mit einem Schritt S70 fort, in dem sie prüft, ob eine weitere Sicherheitsbedingung erfüllt ist.

Diese weist exemplarisch nur eine einzige Unter- bzw. Einzelbedingung auf, beispielsweise einen kleineren Mindestabstand zu einer nächsten Person.

Solange diese weitere Sicherheitsbedingung erfüllt ist (S70: "Y"), kehrt das Verfahren bzw. die Robotersteuerung 2 (dann) zu Schritt S10 zurück.

Andernfalls bzw. solange diese weitere Sicherheitsbedingung nicht erfüllt ist (S70: "N"), wird in zu Schritt S30 analoger Weise in einem Schritt S80 die maximal(zulässig)e Soll-Geschwindigkeit für den TCP bzw. den anderen Punkt an dem Roboter uund/oder die Achsen des Roboters in der (Geschwindigkeits)Regelung der Robotersteuerung 2 auf ein langsameres weiteres Geschwindigkeitslimit reduziert und geprüft, ob der Roboter dieses langsamere weitere Geschwindigkeitslimit überschreitet, das im Ausführungsbeispiel einen Stillstand des Roboters bedingt bzw. diesem entspricht.

Solange bzw. sobald der Roboter das weitere Geschwindigkeitslimit nicht überschreitet, d.h. im Rahmen einer Genauigkeit einer Stillstandsüberwachung stillsteht (S80: "Y"), kehrt das Verfahren bzw. die Robotersteuerung 2 ebenfalls zu Schritt S10 zurück.

Andernfalls bzw. solange der Roboter dieses weitere Geschwindigkeitslimit überschreitet (S80: "N"), bremst die (Geschwindigkeits)Regelung der Robotersteuerung 2 den Roboter ab, indem sie in zu Schritt S40 analoger Weise in einem Schritt S90 seine Antriebe entsprechend kommandiert, um ihn geregelt stillzusetzen.

In einem Schritt S100 überwacht das Verfahren bzw. die Robotersteuerung 2 in sicherer Technik, ob eine aktuelle Verzögerung des Roboters wenigstens einen vorgegebenen Wert aufweist, der insbesondere (betragsmäßig) größer sein kann als der in Schritt S50 geprüfte Wert, bzw. der Roboter wenigstens eine vorgegebene Bremsrampe realisiert, die insbesondere steiler sein kann als die in Schritt S50 geprüfte. Solange dies der Fall ist (S100: "Y"), kehrt das Verfahren bzw. die Robotersteuerung 2 wiederum zu Schritt S10 zurück.

Andernfalls bzw. falls der Roboter in dem weiteren Limitierungsbetriebsmodus (vgl. S70: "N") bei Überschreiten des weiteren Geschwindigkeitslimit (vgl. S80: "N"), d.h. trotz entsprechend kommandiertem Abbremsen (vgl. S90) diese Verzögerungsbedingung nicht erfüllt (S100: "N"), wird in einem Schritt S110 ein STOP 0 ausgelöst.

Man erkennt in den Fig. 2, 3 insbesondere das Zusammenwirken des Abbremsens (vgl. S40, S90) durch die Geschwindigkeitsregelung bei Überschreiten bzw. zum Erreichen des (ersten bzw. weiteren) Geschwindigkeitslimits und der Sicherheitsüberwachung (vgl. S50, S100) dieses Abbremsens.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 11: Roboterarm
- 12: Roboterfahrwerk
- 2: Robotersteuerung
- 3: Abstandserfassungsmittel

## Patentansprüche

1. Verfahren zum Überwachen eines Roboters (11, 12), mit den Schritten:
- Überwachen (S10, S20) einer Sicherheitsbedingung; und
- Betreiben des Roboters in einem Limitierungsbetriebsmodus, solange die überwachte Sicherheitsbedingung nicht erfüllt ist;
wobei in dem Limitierungsbetriebsmodus ein Abbremsen des Roboters kommandiert (S40) und überwacht (S50) wird, solange dieser ein Geschwindigkeitslimit überschreitet.

2. Verfahren nach Anspruch 1, **gekennzeichnet durch** die Schritte:
Überwachen (S70) wenigstens einer weiteren Sicherheitsbedingung; und
Betreiben des Roboters in einem weiteren Limitierungsbetriebsmodus, solange diese weitere überwachte Sicherheitsbedingung nicht erfüllt ist;
wobei in dem weiteren Limitierungsbetriebsmodus ein Abbremsen des Roboters kommandiert (S90) und überwacht (S100) wird, solange dieser ein langsameres weiteres Geschwindigkeitslimit überschreitet.

3. Verfahren nach einem der vorhergehenden Ansprüche, **dadurch gekennzeichnet, dass** eine Sicherheitsreaktion ausgelöst wird (S60, S110), falls das überwachte Abbremsen des Roboters eine vorgegebene Verzögerungsbedingung nicht erfüllt.

4. Verfahren nach dem vorhergehenden Anspruch, **dadurch gekennzeichnet, dass** die Sicherheitsreaktion ein Stillsetzen des Roboters, insbesondere mit unmittelbarer oder mit anschließender oder ohne anschließende Unterbrechung einer Energieversorgung, umfasst.

5. Verfahren nach einem der beiden vorhergehenden Ansprüche, **dadurch gekennzeichnet, dass** die vorgegebene Verzögerungsbedingung eine minimale aktuelle Verzögerung des Roboters und/oder eine Verzögerung des Roboters innerhalb eines bestimmten Zeitraums und/oder eine maximale Geschwindigkeit des Roboters nach einem bestimmten Zeitraum umfasst.

6. Verfahren nach einem der vorhergehenden Ansprüche, **dadurch gekennzeichnet, dass** das Geschwindigkeitslimit und/oder das weitere Geschwindigkeitslimit höchstens 50% einer maximalen Geschwindigkeit des Roboters beträgt, insbesondere einen Stillstand des Roboters bedingt.

7. Verfahren nach einem der vorhergehenden Ansprüche, **dadurch gekennzeichnet, dass** die Sicherheitsbedingung und/oder die weitere Sicherheitsbedingung ein- oder mehrwertig ist und/oder einen Aufenthalt des Roboters in einem vorgegebenen Arbeitsraum und/oder einen Mindestabstand des Roboters zu einer nächsten Person, insbesondere einen personenfreien Schutzraum, umfasst und/oder mithilfe wenigstens eines, insbesondere optischen, Abstandserfassungsmittels (3) überwacht wird.

8. Verfahren nach einem der vorhergehenden Ansprüche, **dadurch gekennzeichnet, dass** der Limitierungsbetriebsmodus infolge einer Erfüllung der Sicherheitsbedingung und/oder der weitere Limitierungsbetriebsmodus infolge einer Erfüllung der weiteren Sicherheitsbedingung und/oder das Kommandieren und/oder das Überwachen des Abbremsens des Roboters infolge eines Unterschreitens des Geschwindigkeitslimits bzw. weiteren Geschwindigkeitslimits deaktiviert wird.

9. Verfahren nach einem der vorhergehenden Ansprüche, **dadurch gekennzeichnet, dass** der Roboter ein mobiler Roboter ist und/oder planmäßig mit wenigstens einer Person kollaboriert.

10. Verfahren nach einem der vorhergehenden Ansprüche, **dadurch gekennzeichnet, dass** die Sicherheitsbedingung und/oder die weitere Sicherheitsbedingung und/oder das Abbremsen des Roboters in sicherer Technik überwacht und/oder die Sicherheitsreaktion in sicherer Technik ausgelöst und/oder das Abbremsen des Roboters in nicht-sicherer Technik kommandiert wird.

11. System (2, 3) zum Überwachen eines Roboters (11, 12), das Durchführung eines Verfahrens nach einem der vorhergehenden Ansprüche eingerichtet ist und/oder aufweist:
Mittel zum Überwachen einer Sicherheitsbedingung;
Mittel zum Betreiben des Roboters in einem Limitierungsbetriebsmodus, solange die überwachte Sicherheitsbedingung nicht erfüllt ist, welches aufweist:
Mittel zum Kommandieren und Mittel zum Überwachen eines Abbremsens des Roboters in dem Limitierungsbetriebsmodus, solange der Roboter ein Geschwindigkeitslimit überschreitet

12. Roboteranordnung mit wenigstens einem Roboter (11, 12) und einem System (2, 3) zum Überwachen des Roboters nach einem der vorhergehenden Ansprüche.

13. Computerprogrammprodukt mit einem Programmcode, der auf einem von einem Computer lesbaren Medium gespeichert ist, zur Durchführung eines Verfahrens nach einem der vorhergehenden Ansprüche.
